Europäisches Patentamt

European Patent Office

Office européen des brevets

(19)

(11) Publication number: **0 044 683**

**B1**

(12) **EUROPEAN PATENT SPECIFICATION**

(45) Date of publication of patent specification: **17.09.86**

(21) Application number: **81303197.8**

(22) Date of filing: **13.07.81**

(51) Int. Cl.⁴: **C 08 L 21/00, C 08 L 51/06 //
(C08L21/00, 51:06),(C08L51/06, 21:00)**

(54) Blends of oil-resistant elastomers and grafted EPDM-terpolymers.

(30) Priority: **14.07.80 US 168873**

(43) Date of publication of application:
**27.01.82 Bulletin 82/04**

(45) Publication of the grant of the patent:
**17.09.86 Bulletin 86/38**

(84) Designated Contracting States:
**BE DE FR GB IT NL**

(56) References cited:
**EP-A-0 011 474
DE-A-2 418 949
FR-A-2 391 242
FR-A-2 450 853**

**PATENT ABSTRACTS OF JAPAN, vol. 1, no. 17,
march 3, 1977, page 979C76**

(73) Proprietor: **UNIROYAL, INC.
1230 Avenue of the Americas Rockefeller Center
New York, New York 10020 (US)**

(72) Inventor: **Cornell, Robert J.
69 Ramsey Avenue
Naugatuck New Haven Connecticut 06770 (US)**

(74) Representative: **Harrison, Michael Robert
URQUHART-DYKES & LORD 5th Floor Tower
House Merrion Way
Leeds LS2 8PA West Yorkshire (GB)**

Courier Press, Leamington Spa, England.

# 0 044 683

**Description**

Background of the invention

It is well known that blends of elastomers containing polar groups such as acrylonitrile-butadiene copolymers (NBR) are not compatible with hydrocarbon rubbers such as ethylene-propylene rubbers. It is possible, however, to blend nitrile rubbers with certain polar resins such as styrene/acrylonitrile/ copolymer; see for example U.S. Patent No. 2,439,202. Blends of nitrile rubber with acrylonitrile/butadiene/ styrene resins (ABS) have been prepared; see for example Japanese Patent No. S—7—5013369. These blends have also been prepared incorporating a third component such as poly(vinylchloride) (PVC); see for example U.S. Patent No. 3,629,050.

Graft polymers of ethylene propylene terpolymers (EPDM) wherein the third monomer is a non-conjugated diene have been prepared wherein the graft polymer comprises styrene acrylonitrile resin (SAN) and other polymers. These grafts of SAN on an EPDM backbone are known as EPAS and are elastomeric in character when the resin side chain represents less than 60% by weight of the EPAS. EPAS has been successfully blended with SAN to prepare weather resistant, impact resistant resins; see for example U.S. Patent Nos. 3,489,821 and 3,489,822.

NBR has good solvent resistance but poor ozone resistance and heat aging properties. The poor qualities are believed to be the result of sites of unsaturation in the backbone which permits scission of the polymer chain under certain adverse conditions. EPDM, on the other hand, has good heat aging and ozone resistance because its unsaturation sites are in side chains and make such polymers immune to scission of the backbone chain. However, these hydrocarbon rubbers, even in the cured state, have poor solvent resistance where they swell when attacked by hydrocarbon solvents.

It has been postulated that blends of EPDM and NBR would exhibit a desirable balance of heat, ozone and solvent resistance. These rubbers are incompatible, however, and blends thereof are not homogeneous. Consequently, they have poor physical properties such as tensile, modulus, elongation and tear strength and are of limited practical use.

Also disclosed in BE—A—882117 is the blending of modified polyolefin or olefin copolymers with thermoplastic polyurethane elastomers.

Summary of the invention

It has surprisingly been found that where EPDM is grafted with methylmethacrylate it becomes compatible with oil resistant elastomers such as NBR or polymers of epichlorohydrin, ethylenevinylacetate, chloroprene, etc. and blends of these rubbers exhibit good physical properties both as a fully cured rubber vulcanizate and as partially cured blends yielding thermoplastic elastomers.

Physical properties as well as rheological characteristics of the blends may be varied by altering the ratio of EPDM to graft monomers in the graft polymer.

Detailed description of the invention

This invention relates to blends of oil resistant elastomers with modified EPDM rubbers. More particularly it relates to blends of oil resistant elastomers with an EPDM which has been made compatible with oil resistant elastomers by grafting methylmethacrylate onto the EPDM backbone.

The term "EPDM" as used in its ASTM definition and means terpolymers of ethylene and propylene with an ethylenically unsaturated non-conjugated diene monomer.

Illustrative non-limiting examples of the dienes which may be used are dicyclopentadiene, methylidenenorbornene, ethylidenenorbornene and 1,4 hexadiene.

Though the EPDM may contain about 30% to about 80% by weight of propylene it more typically comprises about 30% to about 50% by weight propylene. Above 70% polypropylene the EPDM exhibits crystalline characteristics. The EPDM has incorporated into it about 0% to about 15% non-conjugated diene. Typically, the diene content gives rise to iodine numbers of about 5 to about 30. The Mooney Viscosity (ML-4 at 257°F) is typically about 40 to about 100.

Methods of preparing the EPDM graft polymers are well known in the art. For example an EPDM/methyl methacrylate graft polymer may be prepared by grafting methyl methacrylate to the EPDM backbone in the manner taught in U.S. Patent Nos. 3,489,821; 3,489,822 and 3,642,950.

The term "EPG" as used in the specification and claims means an EPDM polymer onto which has been grafted methylmethacrylate.

In the course of preparing the EPG not all of the resin monomers will be grafted onto the backbone. As used in the specification and claims the ungrafted polymer so formed is termed "free resin". Generally, the free resin has the same composition as the resin grafted to the EPDM. The term "graft resin" as used in the specification and claims means methylmethacrylate which has been polymerized and grafted onto the EPDM. Though EPG polymers have been prepared wherein the graft resin comprises about 5% to about 50% by weight of the total EPG, for the purposes of this invention the EPG comprises from 10% to 60%; most preferably about 10% to about 20%; e.g., 15%, of graft resin.

In the preparation of EPG, ungrafted EPDM can be present in the final product as well as free resin.

The preferred oil resistant elastomer is an acrylonitrile containing elastomer e.g. nitrile rubber (NBR). The NBR which may be used in the practice of this invention includes any of the acrylonitrile-butadiene

2

copolymers which are well known in the art. These polymers can contain a minor amount of a third monomer such as divinylbenzene. Though the oil resistant elastomer can comprise about 20 to about 50 weight percent acrylonitrile it preferably is comprised of about 33 to about 45 weight percent acrylonitrile. The commercially available nitrile rubbers useful in the practice of this invention are preferably characterized in having a weight average molecular weight (Mw) of about 2 to about $12 \times 10^5$ and a number average molecular weight (Mn) of about 4 to about $10 \times 10^4$. The Mooney Viscosity (ML-4 at 212°F) for such polymers is about 30 to about 90.

In addition to the oil resistant elastomer and EPG the compositions of this invention can include any of the conventional additives, fillers and curatives used in the preparation of EPDM and the compositions, including fillers such as carbon black, calcium carbonate, magnesium oxide, etc.; curatives; stabilizers such as antioxidants; lubricants—both solid and liquid; extenders and rubber processing oils. Reinforcing fillers such as carbon black can be incorporated in amounts of about 10 to about 100 parts by weight per 100 parts of NBR/EPG blend; preferably about 60 to about 150 parts. Other fillers such as silica and calcium carbonate can also be used.

The NBR/EPG blends of this invention may be used in either the cured or uncured state depending on the intended application and properties desired. For example, where good solvent and ozone resistance is required a full cure similar to that conventionally used in vulcanizing NBR and EPDM rubbers can be utilized. Where it is desired to prepare a blend which can be reprocessed by extrusion, injection molding etc., i.e., thermoplastic elastomers (TPE), either lower levels of curative or no curative is used. Typical curative levels for TPE application range from about 0% to about 40% of the amount necessary for full cure. For typical TPE type curing processes, see U.S. Patent Nos. 3,835,201; 3,806,558; and 3,758,643.

The proportion of NBR to EPG in the blends of this invention is 95/5 to 5/95; preferably about 90/10 to about 40/60; more preferably about 80/20 to 40/60, most preferably about 80/20 to about 50/50 NBR/EPG. It is also within the scope of this invention to include into the compositions minor amounts of a third compatible resin. For example, where an EPAS is prepared the NBR/EPAS blend can have incorporated into it a minor amount of SAN resin. The third resin can be incorporated at about 2 to about 30 weight percent based on the overall composition; more preferably about 5 to about 20 weight percent, e.g., 10 weight percent.

The compositions of this invention may be prepared by a conventional rubber blending method such as the use of 2-roll mills or internal mixers such as Banbury, Ko-Kneader, etc.

The tests used in evaluating the compositions of this invention include Stress-Strain tests including Modulus, Tensile Strength and % Elongation (ASTM D-412); Oil Swell tests (ASRM D-471-72 at 100°C for 70 hours), Ozone resistance and Shore Hardness (ASTM D-2240). The ozone test (MEOT) was carried out by determining the time to appearance of cracks on a dumbbell-shaped sample elongated to varying degrees in an ozone chamber containing 50 ppm ozone at 38°C (100°F). A second test (Bent Loop test) wherein a bent loop of sample specimen (2.5 cm × 10 cm) is tested in the same manner as the dumbbell sample except that no strain other than the effect of bending 180° is applied to the sample.

Although the invention has been described in terms of NBR/EPG compositions, what applies to those compositions also applies to the other oil resistant polymer/EPG compositions of this invention. The advantages of the instant invention may be more readily appreciated by reference to the following examples. The term "EPMM" as used hereinafter means an EPG where the monomer grafted to the EPDM is methylmethacrylate.

The following components were used in the examples described below.

Chemical composition of materials used:
A. Elastomers
1. Hycar (Trade Mark) 4041
   An acrylate elastomer sold by B. F. Goodrich Chemical Company.
2. Hydrin (Trade Mark) 100 and Hydrin 200
   Epichlorohydrin elastomers sold by B. F. Goodrich Chemical Company.
3. Viton (Trade Mark) A
   Fluoro elastomer sold by the Elastomer Chemicals Department, E. I. DuPont de Nemours & Company.
4. Vynathene (Trade Mark) EY 906; 55% vinyl acetate; ML-1+4 (100°C)=20 Ethylene vinyl acetate copolymer sold by U.S.I. Chemicals.
5. Neoprene (Trade Mark) W
   Chloroprene Rubber sold by the Elastomer Chemicals Department; E. I. DuPont de Nemours & Company.
6. Hypalon (Trade Mark) 40; 35% Cl/1% S/ML-1+4 (100°C)=55
   A chlorosulfonated polyethylene elastomer sold by the Elastomer Chemicals Department; E. I. DuPont de Nemours & Company.
7. CPE 3623; 36% Cl
   A chlorinated polyethylene elastomer sold by the Dow Chemical Company.

3

8. Adiprene-C (Adiprene is a Trade Mark)
A polyurethane elastomer sold by the Elastomers Chemicals Department; E. I. DuPont de Nemours & Company.

9. Zamac (Trade Mark) N-123; ML-1+4 (100°C)=30 81% Polymer
An ethylene/acrylic elastomer sold by the Elastomers Chemicals Department; E. I. DuPont de Nemours & Company.

10 Parel-58 (Parel is a Trade Mark); 55—70 Mooney
Copolymer of propylene oxide and allyl glycidyl ether sold by Organics Department of Hercules, Inc.

11 EPMM #12
G=0.11
$I.V._{(DMF)30°C.}$=0.65 dl/g.

B. Compounding materials
1. NBC=Nickel dibutyl dithiocarbamate
2. Maglite-D=Magnesium oxide
3. Agerite White=N,N'-dibetanaphthyl para-phenylene diamine
4. Agerite Resin D=Polymerized trimethyl dihydroquinoline
5. DIAK #1=Hexamethylene diamine carbamate
6. ROYALAC 140=Zinc octadecylisopropyl dithiocarbamate
7. ROYALAC 139=Bis octadecylisopropyl thiuram disulfide
8. DELAC S=N-cyclohexyl-2-benzothiazole sulfenamide
9. Dyphos=Dibasic lead phosphite
10. TE-70=Processing aid sold by Technical Processing
11. NA-22=2-mercaptomidazoline
12. DiCup 40=40% active dicumyl peroxide
13. MBTS=Benzothiazyl disulfide
14. Tetrone A=Dipentamethylene thiuram tetrasulfide
15. MBT=2-mercaptobenzothiazole
16. Caytur 4=Crosslinking catalyst for sulfur curable polyurethanes sold by E. I. DuPont de Nemours & Company.
17. DPG=Diphenyl guanidine
18. MDA=Methylene dianiline
19. MONEX=Tetramethyl thiuram monosulfide
20. Red Lead=More than 90% red lead oxide.

Example 1

This experiment was conducted to demonstrate that grafting of methyl methacrylate onto EPDM is necessary to attain compatibility in NBR/EPMM blends. Stock 1 contains EPMM #1 graft (85%EPDM/15% polymethyl methacrylate), which is part of the invention. Degree of grafting is 0.08 and free resin intrinsic viscosity is 0.47 (30°C. DMF). Stock 2, which is outside the invention, is a mechanical blend (solvent mixed) of the same composition of nitrile rubber, polymethyl methacrylate, and EPDM rubber. The oil resistant nitrile elastomer employed is a butadiene-acrylonitrile copolymer having an acrylonitrile content of about 33% and a Mooney viscosity of 75 (ML-4 at 100°C). The polymethyl methacrylate resin employed, which was prepared by suspension polymerization, has an intrinsic viscosity of 1.03 (30°C. dimethylformamide). The EPDM #1 polymer employed an ethylene-propylene-5-ethylidene-2-norbornene terpolymer having an ethylene/propylene weight ratio of 57/43, an iodine number of 18 and a Mooney viscosity (ML-4 at 125°C) of 52. The following compound recipes were used:

4

| Material | Parts | |
| --- | --- | --- |
| | Stock 1 | Stock 2 |
| NBR #1 | 70 | 70 |
| Polymethyl methacrylate | — | 4.5 |
| EPMM #1 graft | 30 | — |
| EPDM #1 | — | 25.5 |
| Zinc oxide | 5 | 5 |
| Stearic acid | 1 | 1 |
| Royalac 140[1] | 1 | 1 |
| Royalac 139[2] | 1.5 | 1.5 |
| Sulfur | 1 | 1 |
| N-cyclohexyl-2-benzothiazolesulfenamide | 1 | 1 |

[1] Royalac 140—Zinc N-octadecyl-N-isopropyl dithiocarbamate
[2] Royalac 139—Bis (N-octadecyl-N-isopropyl thiuram disulfide).

The stocks were mixed in a Brabender Plasticorder (trade mark) at mixing speeds between 25—40 rpm keeping stock temperature below about 105°C. The ingredients were charged in the following order of addition (not critical): rubbers, resin and vulcanizing agents—accelerators. The stocks were cured in a mold for 10 minutes at 320°F (160°C). Vulcanizate properties are determined by ASTM procedures D-412, D-2240, and D-471-72. The results are tabulated in Table I.

TABLE I
EPMM/NBR vs. EPDM/PMMA/NBR blend

| | 1 | 2 |
| --- | --- | --- |
| Stock number | | |
| EPMM #1 | 30 | — |
| P-MMA | — | 4.5 |
| EPDM #1 | — | 25.5 |
| NBR #1 | 70 | 70 |
| Physical properties | | |
| 100% modulus ($Pa \times 10^{-6}$ (psi)) | 1.1 (160) | 0.90 (130) |
| Tensile strength ($Pa \times 10^{-6}$ (psi)) | 5.2 (760) | 1.9 (280) |
| % Elongation at break | 420 | 270 |
| Shore (A) hardness | 55 | 52 |
| % Volume change #3 Oil, 70 hours at 125°C. | +89.1 | +111.6 |

The results indicate superior tensile strength, percent elongation at break and lower oil swell for the NBR/EPMM (Stock 1) blend of this invention in comparison to the three component blend of the same overall composition.

Example 2

This example shows that the weight ratio of EPDM to methyl methacrylate in the EPMM graft can be varied from 90/10 to 60/40 (Stocks 1, 3, 4). The compositions of NBR #1, EPMM #1 and EPDM #1 used in

5

this example are the same as in Example 1. The compositions of EPMM #2, and EPMM #3 grafts are as follows:

|  | EPDM | EPDM/PMMA | I.V. PMMA (DMF, 30°C.) | Degree-grafting |
|---|---|---|---|---|
| EPMM #2 | EPDM #1 | 95/5 | 0.15 | 0.02 |
| EPMM #3 | EPDM #1 | 60/40 | 1.33 | 0.31 |

The recipe and procedure are the same as those used in Example 1.

The physical properties of these stocks are summarized in Table II. The results indicate superior tensile strength, present elongation at break and lower oil swell for Stocks 1, 3 and 4, which are part of the invention. The EPDM #1/NBR #1 blend exhibited poor tensile strength and a higher % volume change in #3 ASTM oil. Excellent improvement in compatibility is obtained even when the EPDM is grafted with only 5% methacrylate (Stock 2).

TABLE II
Use of various levels of MMA in EPMM grafts for NBR/EPMM blends

|  | 1 | 2 | 3 | 4 |
|---|---|---|---|---|
| Stock number |  |  |  |  |
| EPMM #1 | 70 | — | — | — |
| EPMM #2 | — | 70 | — | — |
| EPMM #3 | — | — | 70 | — |
| EPDM #1 | — | — | — | 70 |
| NBR #1 | 30 | 30 | 30 | 30 |
| Physical properties (unaged) |  |  |  |  |
| 100% Modulus (Pa×10⁻⁶ (psi)) | 1.10 (160) | 0.90 (130) | 1.7 (250) | 0.69 (100) |
| 200% Modulus (Pa×10⁻⁶ (psi)) | 2.0 (290) | 1.6 (230) | 3.4 (500) | 1.1 (170) |
| Tensile strength | 5.2 (760) | 3.2 (460) | 4.2 (610) | 1.4 (210) |
| % Elongation at break | 420 | 350 | 250 | 250 |
| Shore (A) hardness | 55 | 51 | 62 | 51 |
| % Volume change ASTM #3 Oil, 70 hours at 125°C. | +89.1 | +106.1 | +66.5 | +151.9 |

Example 3

This example shows that excellent compatibility, which is evident by superior physical properties, is obtained at varying ratios of EPMM and NBR polymers in the prepared blends. The NBR/EPMM weight ratio blends range from 95/5 to 5/95 (Stocks 6, 7, 8, 9 and 10). The NBR/EPDM blend counterparts, which are outside this invention, have also been run (Stocks 11, 12, 13, 14 and 15) to exhibit properties inferior to those of the compositions of this invention. Stocks 16 and 17 are NBR and EPDM polymers respectively. The compositions of NBR #1, EPMM #1 and EPDM #1 are described in Example 1. The recipe and procedure are essentially the same as in Example 1. The physical properties of these blends, in which the level of NBR #1 to EPMM #1 has been varied from 95/5 to 5/95 and compared to corresponding NBR #1/EPDM #1 blends, are summarized in Table III. Excellent physical properties (a measure of blend compatibility) were obtained at all ratios of NBR #1/EPMM #1. The molded test specimens are uniform in appearance which indicate excellent compatibility between the two polymers. Compared to their counterpart blends of NBR #1/EPDM #1 (Stocks 11, 12, 13, 14 and 15), compositions of this invention exhibit higher tensile strength and lower volume swell in #3 oil is obtained. The molded test specimens of NBR #1/EPDM #1 blends have a marbled appearance which visually indicates poor dispersion of the two polymers. The tensile strength reaches a maximum (Stock 8) for the 50/50 NBR #1/EPMM #1 blend, where as the corresponding 50/50 NBR #1/EPDM #1 blend (Stock 13) is quite poor.

6

## TABLE III
### Physical properties

Blends: Various EPMM/NBR ratios vs. EPDM/NBR ratios

|  | 6 | 7 | 8 | 9 | 10 | 11 |
|---|---|---|---|---|---|---|
| **Stock number** |  |  |  |  |  |  |
| EPMM #1 | 5 | 30 | 50 | 70 | 95 | — |
| NBR #1 | 95 | 70 | 50 | 50 | 5 | 95 |
| EPDM #1 | — | — | — | — | — | 5 |
| **Physical properties (unaged)** |  |  |  |  |  |  |
| 100% Modulus $(Pa \times 10^{-6}$ (psi)) | 1.2 (180) | 1.4 (200) | 1.6 (240) | 1.7 (240) | 1.9 (270) | 1.1 (160) |
| 200% Modulus $(Pa \times 10^{-6}$ (psi) | 2.1 (310) | 2.3 (340) | 2.6 (380) | 3.0 (440) | 3.9 (560) | 1.7 (240) |
| Tensile strength $(Pa \times 10^{-6}$ (psi)) | 3.7 (540) | 5.9 (850) | 8.3 (1200) | 6.8 (990) | 6.3 (910) | 3.5 (510) |
| % Elongation at break | 350 | 440 | 450 | 350 | 260 | 410 |
| Shore (A) hardness | 55 | 57 | 58 | 59 | 58 | 55 |
| % Volume change ASTM #3 Oil, 70 hours at 212°F. | +26.6 | +81.9 | +128.9 | +172.4 | +202.5 | +28.9 |

Blends: Various EPMM/NBR ratios vs. EPDM/NBR ratios

|  | 12 | 13 | 14 | 15 | 16 | 17 |
|---|---|---|---|---|---|---|
| **Stock number** |  |  |  |  |  |  |
| EPMM #1 | — | — | — | — | — | — |
| NBR #1 | 70 | 50 | 30 | 5 | 100 | — |
| EPDM #1 | 30 | 50 | 70 | 95 | — | 100 |
| **Physical properties (unaged)** |  |  |  |  |  |  |
| 100% Modulus $(Pa \times 10^{-6}$ (psi)) | 0.96 (140) | 1.2 (170) | 1.2 (170) | 0.96 (140) | 1.4 (200) | 1.0 (150) |
| 200% Modulus $(Pa \times 10^{-6}$ (psi)) | 1.6 (230) | 1.9 (270) | — | — | 2.5 (360) | 1.7 (250) |
| Tensile strength $(Pa \times 10^{-6}$ (psi)) | 2.5 (370) | 2.1 (300) | 1.8 (260) | 1.7 (250) | 4.3 (620) | 2.6 (380) |
| % Elongation at break | 310 | 230 | 180 | 180 | 340 | 290 |
| Shore (A) hardness | 53 | 53 | 54 | 53 | 54 | 52 |
| % Volume change ASTM #3 Oil, 70 hours at 100°C. | +105 | (a) | (a) | +258.7 | +20 | +255.2 |

(a) Sample decomposed in oil.

Example 4

This example demonstrates that various types of nitrile rubbers can be used to prepare compatible blends with EPMM grafts. The weight percent acrylonitrile in the nitrile rubber was varied from 20% to 47% (Stocks 18, 19, 20 and 21). Corresponding NBR/EPDM blends were also prepared to demonstrate the improvement in blend compatibility (Stocks 22, 23, 24 and 25). EPDM #1, EPMM #1 and NBR #1 compositions are described in Example 1. The composition of the nitrile rubbers used are the following:

# 0 044 683

| Butadiene-acrylonitrile copolymer | % ACN | Mooney viscosity (ML-4 @ 100°C.) |
|---|---|---|
| NBR #2 | 23 | 50 |
| NBR #3 | 40 | 65 |
| NBR #4 | 45 | 50 |

The recipe and procedure are the same as those used in Example 1. The physical properties of these blends are presented in Table IV. The improvement in compatibility is more pronounced as the nitrile content is increased. The compatibility was so poor for comparative Stocks 24 and 25 (outside the invention) that test specimens could not be molded from the prepared blends. Uniform blends were readily prepared for all NBR/EPMM blends having physical properties superior to those of the comparative blends (Stocks 22 and 23).

## TABLE IV
### Physical properties

NBR/EPMM (varying nitrile content in NBR) vs. NBR/EPDM blends

| | 18 | 19 | 20 | 21 | 22 | 23 | 24 | 25 |
|---|---|---|---|---|---|---|---|---|
| **Stock number** | | | | | | | | |
| EDDM #1 | — | — | — | — | 30 | 30 | 30 | 30 |
| EPMM #1 | 30 | 30 | 30 | 30 | — | — | — | — |
| NBR #1 | — | 70 | — | — | — | 70 | — | — |
| NBR #2 | 70 | — | — | — | 70 | — | — | — |
| NBR #3 | — | — | 70 | — | — | — | 70 | — |
| NBR #4 | — | — | — | 70 | — | — | — | 70 |
| **Physical properties (unaged)** | | | | | | | | |
| 100% Modulus (Pa×10⁻⁶ (psi)) | 1.4 (210) | 1.7 (240) | 1.7 (250) | 1.4 (210) | 1.0 (150) | 1.2 (170) | — | — |
| 200% Modulus (Pa×10⁻⁶ (psi)) | 2.7 (390) | 2.8 (400) | 3.0 (430) | 2.4 (350) | 1.7 (240) | 2.0 (290) | — | — |
| Tensile strength Pa×10⁻⁶ (psi)) | 3.2 (470) | 7.6 (1100) | 9.6 (1430) | 8.3 (1200) | 2.6 (380) | 2.3 (340) | — | — |
| % Elongation at break | 250 | 450 | 470 | 470 | 310 | 230 | — | — |
| Shore (A) hardness | 50 | 54 | 56 | 59 | 47 | 50 | — | — |
| % Volume change ASTM #3 Oil, 70 hours at 100°C | +122.9 | +88.7 | +57.4 | +50 | +154.7 | +126.4 | — | — |

[a] Sample decomposed in oil.

## Example 5

This example demonstrates the ability to use various types of EPDM as the base rubber for preparing EPMM grafts. Blends of these EPMM grafts with NBR were prepared (Stocks 26, 27, 28, 29 and 30) and compared to corresponding EPDM/NBR blends (Stocks 31, 32, 33, 34 and 35, which are outside this invention), to illustrate the improvement in blend compatibility. The composition of the various EPDM and EPMM grafts used are the following (Table V). The recipe and procedure are essentially the same as in Example 1. The physical properties of these blends are presented in Table IV.

EPMM grafts of this invention results in smooth uniform blends with NBR. Higher tensile strength and lower oil swell are obtained for blends of this invention (Stocks 26, 27, 28, 29 and 30) when compared to

8

blends using their corresponding ungrafted EPDM base elastomers (Stocks 31, 32, 33, 34 and 35) blends outside the invention, were non-uniform in appearance.

TABLE V

Composition: EPDM and EPDM/Methyl methacrylate 85/15 (EPMM) grafts

| EPDM | Ethylene/ propylene | Termonomer | Iodine number | Mooney viscosity[1] | EPMM[3] |
|---|---|---|---|---|---|
| EPDM #2 | 45/55 | — | — | 42[2] | EPMM #4 G=0.03 I.V.=0.45 |
| EPDM #3 | 53/47 | DCPD | 10 | 59 | EPMM #5 G=0.06 I.V.=0.59 |
| EPDM #4 | 56/44 | ENB | 10 | 55 | EPMM #6 G=0.05 I.V.=0.51 |
| EPDM #5 | 56/44 | 1,4-Hexadiene | 10 | 55 | EPMM #7 G=0.03 I.V.=0.59 |
| EPDM #6 | 75/25 | ENB | 10 | — | EPMM #8 G=0.08 I.V.=0.28 |

[1] ML-1+4 @ 125°C.
[2] @ 100°C.
[3] G=Degree of grafting
I.V.=Intrinsic viscosity of free methyl methacrylate resin (30°C. DMF)
DCPD=Dicyclopentadiene
ENB=5-ethylidene-2-norbornene.

TABLE VI
Physical properties

Blends: NBR/EPMM vs. NBR/EPDM (use of various EPDM base polymers)

| | 26 | 27 | 28 | 29 | 30 |
|---|---|---|---|---|---|
| Stock number | | | | | |
| NBR #1 | 60 | 60 | 60 | 60 | 60 |
| EPMM #4 | 40 | — | — | — | — |
| EPMM #5 | — | 40 | — | — | — |
| EPMM #6 | — | — | 40 | — | — |
| EPMM #7 | — | — | — | 40 | — |
| EPMM #8 | — | — | — | — | 40 |
| EPDM #2 | — | — | — | — | — |
| EPDM #3 | — | — | — | — | — |
| EPDM #4 | — | — | — | — | — |
| EPDM #5 | — | — | — | — | — |
| EPDM #6 | — | — | — | — | — |

9

# 0 044 683

TABLE VI (contd.)

| Physical properties (unaged) | | | | | |
|---|---|---|---|---|---|
| 100% Modulus (Pa×10⁻⁶ (psi)) | 0.96 (140) | 1.7 (250) | 1.3 (190) | 1.2 (170) | 1.8 (260) |
| 200% Modulus (Pa×10⁻⁶ (psi)) | 1.5 (230) | 2.9 (420) | 2.1 (300) | 1.8 (260) | 2.7 (390) |
| % Elongation at break | 370 | 360 | 460 | 400 | 420 |
| Shore (A) hardness | 55 | 55 | 55 | 53 | 68 |
| Tensile strength (Pa×10⁻⁶ (psi)) | 3.0 (440) | 4.8 (700) | 5.5 (800) | 3.8 (550) | 7.1 (1030) |
| % Volume change ASTM #3 Oil, 70 hours at 100°C. | +51.5 | +113 | +151.9 | +146.8 | +149[5] |

Blends: NBR/EPMM vs. NBR/EPDM (use of various EPDM base polymers)

| | 31 | 32 | 33 | 34 | 35 |
|---|---|---|---|---|---|
| Stock number | | | | | |
| NBR #1 | 60 | 60 | 60 | 60 | 60 |
| EPMM #4 | — | — | — | — | — |
| EPMM #5 | — | — | — | — | — |
| EPMM #6 | — | — | — | — | — |
| EPMM #7 | — | — | — | — | — |
| EPMM #8 | — | — | — | — | — |
| EPDM #2 | 40 | — | — | — | — |
| EPDM #3 | — | 40 | — | — | — |
| EPDM #4 | — | — | 40 | — | — |
| EPDM #5 | — | — | — | 40 | — |
| EPDM #6 | — | — | — | — | 40 |
| Physical properties (unaged) | | | | | |
| 100% Modulus (Pa×10⁻⁶ (psi)) | 0.83 (120) | 0.90 (130) | 0.96 (140) | 0.76 (110) | 1.6 (230) |
| 200% Modulus (Pa×10⁻⁶ (psi)) | 1.0 (150) | 1.3 (190) | 1.3 (190) | 0.96 (140) | 2.2 (320) |
| % Elongation at break | 2.0 290 | 240 | 370 | 440 | 260 |
| Shore (A) hardness | 49 | 49 | 48 | 48 | 63 |
| Tensile strength (Pa×10⁻⁶ (psi)) | 1.2 (180) | 1.5 (220) | 2.2 (320) | 1.4 (210) | 2.6 (380) |
| % Volume change ASTM #3 Oil, 70 hours at 100°C. | +95.1 | +140 | +178 | +177.3 | +184.5[6] |

Example 6

In this example, improvement in vulcanizate properties are demonstrated for NBR/EPMM blends of this invention. These NBR/EPMM blends are compounded in a black low sulfur recipe (Stocks 36 and 38). Comparative blends, which are outside of this invention, were run using EPDM (Stocks 37 and 39). NBR #1, EPDM #1 and EPMM #1 are described in Example 1. NBR #3 is described in Example 4. The recipe used is as follows:

10

**0 044 683**

| 100 | parts | Rubber |
| 70 | „ | N-774 Black |
| 5 | „ | Zinc oxide |
| 1 | „ | Stearic acid |
| 3 | „ | Zinc salt mercaptobenzimidazole |
| 1.5 | „ | Stabilizer (reaction product acetone and diphenyl amine sold by Uniroyal) |
| 2 | „ | N-t-butyl-2-benzothiazole sulfenamide |
| 3.5 | „ | Tetramethyl thiuram disulfide |
| 20.0 | „ | TP-95 plasticizing agent (diester) |
| 0.3 | „ | Spider sulfur |

The mixing procedure is essentially the same as in Example 1 except that black is added last. The compounded stocks are press cured for 30 minutes at 160°C. The vulcanizate properties for the two blends of this invention (Stocks 36 and 38) compared to NBR/EPDM blends (Stocks 37 and 39) are summarized in Table VII. Excellent vulcanizate properties (tensile, percent elongation, air aging, oil swell and ozone resistance) are obtained for compounds of this invention. Comparative compounds (Stocks 37 and 39), which are outside this invention, have poorer vulcanizate properties.

TABLE VII
Vulcanizate properties (Black-low sulfur recipe)

NBR/EPMM vs. NBR/EPDM blends

| | 36 | 37 | 38 | 39 |
|---|---|---|---|---|
| **Stock number** | | | | |
| NBR #1 | 65 | 65 | — | — |
| NBR #3 | — | — | 65 | 65 |
| EPMM #1 | 35 | — | 35 | — |
| EPDM #1 | — | 35 | — | 35 |
| **Physical properties (unaged)** | | | | |
| 100% Modulus ($Pa \times 10^{-6}$ (psi)) | 3.2 (465) | 2.8 (410) | 3.4 (500) | 2.5 (370) |
| 200% Modulus ($Pa \times 10^{-6}$ (psi)) | 7.6 (1105) | 6.7 (970) | 7.5 (1090) | 5.4 (790) |
| Tensile strength ($Pa \times 10^{-6}$ (psi)) | 11.6 (1685) | 10.5 (1520) | 11.9 (1725) | 9.5 (1385) |
| % Elongation at break | 315 | 330 | 335 | 370 |
| Shore (A) hardness | 70 | 63 | 70 | 67 |
| % Volume change #3 ASTM Oil, 70 hours at 100°C. | +43.2 | +49.0 | +36.2 | +39.5 |
| **Air aged, 70 hours, 150°C.** | | | | |
| Tensile strength ($Pa \times 10^{-6}$ (psi)) | 11.0 (1600) | 10.1 (1460) | 13.0 (1880) | 11.2 (1620) |
| % Elongation at break | 50 | 60 | 70 | 70 |
| Shore (A) hardness | 89 | 86 | 90 | 88 |
| **Ozone resistance (50 pphm)** **MEOT 38°C. (Max. time 168 hrs.)** | | | | |
| 15% Elongation | OK | OK | OK | OK |
| 25% „ | OK | OK | OK | OK |
| 35% „ | 96C | OK | OK | 96C |
| 45% „ | 24C | 96C | 144C | 24C |

C—Sample failed.

11

Example 7

In this example, electron photomicrographs clearly show the excellent compatibility obtained in NBR/EPMM blends (Stocks 7 and 8) compared to NBR/EPDM blends (Stocks 12 and 13) which are outside this invention.

The electron photomicrographs of Stocks 7 and 8 show the EPMM graft dispersed in the nitrile elastomer. The particle size (elongated in shape) of the EPMM graft ranges from about 0.15 µm in diameter for spherical particles to about 6 µm in length by about 1.5 µm in width for elongated particles. The average size of the EPMM graft is about 2.5 µm in length to about 1 µm in width. Because of the irregular shapes, particle size distribution is difficult to determine.

For stocks 12 and 13, which are outside this invention, the EPDM and NBR polymers are stratified. The EPDM polymer in many electron photomicrographs were in excess of 27 µm in length. Essentially no dispersion of the EPDM in NBR is detected.

Example 8

In order to demonstrate that the results achieved with NBR can be achieved with any oil resistant elastomer a series of experiments were carried out with several other polymers. The results are shown in Tables IX and X.

TABLE VIII

Blends of EPDM vs. EPMM grafts with oil resistant elastomers

| | A | B | C | D | E |
|---|---|---|---|---|---|
| Physical properties | | | | | |
| PDM #6 (Patent Memo; page 14) | 60[a] | | 60[a] | | 60[a] |
| PDM #6/MMA 80/20 [EPMM #12] | | 60 | | 60 | |
| Hycar 40401 | | | | | |
| Hydrin 100 | 40 | 40 | | | |
| Hydrin 200 | | | 40 | 40 | |
| Vynathene (EY-906) | | | | | 40 |
| Viton-A | | | | | |
| Ivory soap | | | | | |
| NBC | | | | 0.4 | |
| Maglite-D | | | | | |
| Zinc oxide | | | | | 5 |
| Stearic acid | | | | | 1 |
| Agerite white | | | | | |
| Agerite resin D | | 0.4 | | | |
| Diak #1 | | | | | |
| Royalac 140 | | 0.6 | | 0.6 | |
| Royalac 139 | | 0.9 | | 0.9 | |
| Sulfur | | 0.6 | | 0.6 | |
| Delac S | | 0.6 | | 0.6 | |
| Dyphos | | 2 | | | |
| TE-70 | | 0.4 | | 0.4 | |

12

# 0 044 683

TABLE VIII (contd.)

Blends of EPDM vs. EPMM grafts with oil resistant elastomers

| | A | B | C | D | E |
|---|---|---|---|---|---|
| NA-22 | | 0.6 | | 0.6 | |
| Red lead | | | | 2 | |
| DiCup 40C | | | | | 5.6 |
| Tri allyl cyanurate | | | | | 0.4 |

[a] Compatibility so poor blend not cured.

| | A | B | C | D | E |
|---|---|---|---|---|---|
| Cure Temp. | — | 154°C | — | 154°C | 163°C |
| Cure Time | — | 30 min. | — | 30 min. | 15 min. |
| Physical properties (unaged) 100% modulus (Pa×10⁻⁶ (psi)) | — | 1.5 (220) | — | 1.7 (240) | 1.2 (180) |
| Tensile str. (Pa×10⁻⁶ (psi)) | — | 11.2 (1630) | — | 10.5 (1530) | 7.2 (1050) |
| % Elongation | — | 430 | — | 480 | 460 |

TABLE VIII (contd.)

| | F | G | H | I | J |
|---|---|---|---|---|---|
| Physical properties PDM #6 (Patent Memo; Page 14) | | 60[a] | | 60[a] | |
| PDM #6/MMA 80/20 [EPMM #12] | 60[a] | | 60 | | 60 |
| Hycar 4041 | | | | 40 | 40 |
| Hydrin 100 | | | | | |
| Hydrin 200 | | | | | |
| Vynathene (EY-906) | 40 | | | | |
| Viton-A | | 40 | 40 | | |
| Ivory soap | | | | | 1.40 |
| NBC | | | | | |
| Maglite-D | | | 6 | | |
| Zinc oxide | 5 | | 3 | | 3 |
| Stearic acid | 1 | | 0.6 | | 1.5 |
| Agerite white | | | 0.43 | | |
| Agerite resin D | | | | | |
| Diak #1 | | | 0.50 | | |
| Royalac 140 | | | 0.6 | | 0.6 |

13

### TABLE VIII (contd.)

| | F | G | H | I | J |
|---|---|---|---|---|---|
| Royalac 139 | | | 0.9 | | 0.9 |
| Sulfur | | | 0.6 | | 0.7 |
| Dalac S | | | 0.6 | | 0.6 |
| Dyphos | | | | | |
| TE-70 | | | | | |
| Na-22 | | | | | |
| Red lead | | | | | |
| DiCup 40C | 5.6 | | | | |
| Tri allyl cyanurate | 0.4 | | | | |

[a] Compatibility so poor blend not cured.

| | F | G | H | I | J |
|---|---|---|---|---|---|
| Cure Temp. | 163°C | — | 160°C | — | 160°C |
| Cure Time | 15 min. | — | 30 min. | — | 30 min. |
| Physical properties (unaged) 100% modulus (Pa×10⁻⁶ (psi)) | 2.1 (310) | — | 3.9 (570) | — | 1.7 (240) |
| Tensile str. (Pa×10⁻⁶ (psi)) | 10.5 (1520) | — | 9.6 (1400) | 6.8 (990) | — |
| % Elongation | 420 | — | 380 | — | 380 |

### TABLE IX
Blends of EPDM vs. EPMM grafts with oil resistant elastomers

| | K | L | M | N | O | P |
|---|---|---|---|---|---|---|
| Physical properties EPDM #6 | 60 | | 60 | | 60 | |
| EPDM #12 | | 60 | | 60 | | 60 |
| Neoprene W | 40 | 40 | | | | |
| Hypalon 40 | | | 40 | 40 | | |
| CPE 3623 | | | | | 40 | 40 |
| Adiprene-C | | | | | | |
| Zamac N-123 | | | | | | |
| Parel-58 | | | | | | |
| Zinc oxide | 5 | 5 | 3 | 3 | 3 | 3 |
| Stearic acid | 6 | 6 | 6 | 6 | | |
| Maglite D | 1.6 | 1.6 | | | 8 | 8 |
| Royalac 140 | 0.6 | 0.6 | 0.6 | 0.6 | | |

# 0 044 683

TABLE IX (contd.)
Blends of EPDM vs. EPMM grafts with oil resistant elastomers

|  | K | L | M | N | O | P |
|---|---|---|---|---|---|---|
| Royalac 139 | 0.9 | 0.9 | 0.9 | 0.9 |  |  |
| Sulfur | 0.6 | 0.6 | 0.6 | 0.6 |  |  |
| Dalac S | 0.6 | 0.6 | 0.6 | 0.6 |  |  |
| N-22 | 0.3 | 0.3 |  |  |  |  |
| MBTS |  |  | 0.2 | 0.2 |  |  |
| Tetrone A |  |  | 0.8 | 0.8 |  |  |
| DiCup 40C |  |  |  |  | 8 | 8 |
| MBT |  |  |  |  |  |  |
| Cadmium stearate |  |  |  |  |  |  |
| Caytur |  |  |  |  |  |  |
| DPG |  |  |  |  |  |  |
| MDA |  |  |  |  |  |  |
| Monex |  |  |  |  |  |  |
| Cure Temp. | 163°C | 163°C | 154°C | 154°C | 160°C | 160°C |
| Cure Time | 15 min. | 15 min. | 30 min. | 30 min. | 30 min. | 30 min. |
| Physical properties (unaged) 100% modulus $(Pa \times 10^{-6} \ (psi))$ | 1.4 (200) | 2.6 (380) | 3.2 (460) | 5.6 (810) | 2.6 (380) | 3.6 (520) |
| Tensile str. $(Pa \times 10^{-6} \ (psi))$ | 12.1 (1760) | 18.3 (2660) | 6.9 (1000) | 10.9 (1580) | 5.6 (820) | 13.4 (1940) |
| % Elongation | 740 | 550 | 180 | 170 | 250 | 350 |

TABLE IX (contd.)

|  | Q | R | S | T | U | V |
|---|---|---|---|---|---|---|
| Physical properties EPDM #6 | 60 |  | 60 |  | 60 |  |
| EPDM #12 |  | 60 |  | 60 |  | 60 |
| Neoprene W |  |  |  |  |  |  |
| Hypalon 40 |  |  |  |  |  |  |
| CPE 3623 |  |  |  |  |  |  |
| Adiprene-C | 40 | 40 |  |  |  |  |
| Zamac N-123 |  |  | 40 | 40 |  |  |

15

TABLE IX (contd.)

| | Q | R | S | T | U | V |
|---|---|---|---|---|---|---|
| Parel-58 | | | | | 40 | 40 |
| Zinc oxide | 3 | 3 | 3 | 3 | 3 | 3 |
| Stearic acid | 0.6 | 0.6 | 0.6 | .6 | 1 | 1 |
| Maglite D | | | | | | |
| Royalac 140 | 0.6 | 0.6 | 0.6 | .6 | 0.6 | 0.6 |
| Royalac 139 | 0.9 | 0.9 | 0.9 | .9 | 0.9 | 0.9 |
| Sulfur | 0.6 | 0.6 | 0.6 | .6 | 6 | 0.6 |
| Dalac S | 0.6 | 0.6 | 0.6 | .6 | 0.6 | 0.6 |
| N-22 | | | | | | |
| MBTS | 1.6 | 1.6 | | | | |
| Tetrone A | | | | | | |
| DiCup 40C | | | | | | |
| MBT | 0.8 | 0.8 | | | 0.6 | 0.6 |
| Cadmium stearate | 0.2 | 0.2 | | | | |
| Caytur | 0.4 | 0.4 | | | | |
| DPG | | | 1.6 | 1.6 | | |
| MDA | | | 0.5 | 0.5 | | |
| Monex | | | | | 0.6 | 0.6 |
| Cure Temp. | 148°C | 148°C | 177°C | 177°C | 160°C | 160°C |
| Cure Time | 30 min. | 30 min. | 15 min. | 15 min. | 30 min. | 30 min. |
| Physical properties (unaged) 100% modulus $(Pa \times 10^{-6} (psi))$ | 1.4 (210) | 2.4 (350) | 1.5 (220) | 2.8 (410) | 1.2 (170) | 2.0 (290) |
| Tensile str. $Pa \times 10^{-6}$ (psi)) | 10.5 (1520) | 13.2 (1910) | 8.8 (1280) | 12.9 (1870) | 5.4 (790) | 8.6 (1250) |
| % elongation | 460 | 370 | 680 | 500 | 480 | 370 |

As used in the specifications and claims the terms "oil resistant elastomers" means those elastomers which are resistant to swell when subject to oil. Not wishing to be bound by theory it is believed this oil resistance is attributed to the incorporation into the polymer of polar groups such as nitrile, esters, halogens, etc.

**Claims**

1. A polymer blend composition comprising a blend of (1) 5 percent to 95 percent by weight based on the total blend of an oil resistant elastomer and (2) an ethylene/propylene/non-conjugated diene terpolymer having a resin grafted thereon characterised in that the graft resin is a methylmethacrylate resin in an amount of from 10 to 60 percent by weight based on the total weight of component (2).

16

# 0 044 683

2. A composition according to claim 1 characterised in that the non-conjugated diene of the ethylene propylene terpolymer is ethylidenenorbornene, dicyclopentadiene or hexadiene.

3. A composition according to claim 1 or claim 2 characterised in that the oil resistant elastomer is a nitrile rubber.

4. A composition according to claim 3 characterised in that the nitrile rubber comprises about 20 to about 50 weight percent, based on the nitrile rubber, of acrylonitrile.

5. A composition according to claim 4 characterised in that the nitrile rubber comprises about 33 to about 45 weight percent acrylonitrile.

6. A composition according to claim 5 characterised in that the nitrile rubber comprises about 40 to about 90 weight percent of the total composition.

7. A composition according to claim 6 characterised in that the nitrile rubber comprises about 50 to 80 weight percent of the total blend.

8. A composition according to any of the preceding claims characterised in that the composition also includes an effective amount of a vulcanizing agent.

9. A composition according to claim 8 characterised in that the vulcanizing agent is sulfur and a cure accelerator, or is an organic peroxide.

10. A composition according to claim 8 or claim 9 characterised in that the composition is vulcanized.

11. A composition according to any of the preceding claims characterised in that the oil resistant elastomer is a polyepichlorohydrin elastomer, a fluoro-elastomer a vinylacetate elastomer, polychloroprene, chlorosulfonated polyethylene, chlorinated polyethylene, a polyurethane elastomer, an ethylene-acrylic acid copolymer or a polymer of at least one alkylene oxide monomer.

## Patentansprüche

1. Polyblend-Mischung, die ein Blend aus

(1) 5 bis 95 Masse%, bezogen auf das gesamte Blend, eines ölfesten Elastomers und

(2) einem Ethylen/Propylen/nichtkonjugiertes Dien-Terpolymer mit einem darauf aufgepfropften Harz

enthält, dadurch gekennzeichnet, daß das Pfropfharz ein Methylmethacrylatharz in einer Menge von 10 bis 60 Masse%, bezogen auf die Gesamtmasse des Bestandteils (2), ist.

2. Mischung nach Anspruch 1, dadurch gekennzeichnet, daß das nichtkonjugierte Dien des Ethylen/Propylen-Terpolymers Ethylidennorbornen, Dicyclopentadien oder Hexadien ist.

3. Mischung nach Anspruch 1 oder Anspruch 2, dadurch gekennzeichnet, daß das ölfeste Elastomer ein Nitrilkautschuk ist.

4. Mischung nach Anspruch 3, dadurch gekennzeichnet, daß der Nitrilkautschuk etwa 20 bis etwa 50 Masse%, bezogen auf den Nitrilkautschuk, Acrylnitril enthält.

5. Mischung nach Anspruch 4, dadurch gekennzeichnet, daß der Nitrilkautschuk etwa 33 bis etwa 45 Masse% Acrylnitril enthält.

6. Mischung nach Anspruch 5, dadurch gekennzeichnet, daß der Nitrilkautschuk etwa 40 bis etwa 90 Masse% des gesamten Blends ausmacht.

7. Mischung nach Anspruch 6, dadurch gekennzeichnet, daß der Nitrilkautschuk etwa 50 bis 80 Masse% des gesamten Blends ausmacht.

8. Mischung nach einem der vorhergehenden Ansprüche, dadurch gekennzeichnet, daß die Mischung auch eine wirksame Menge eines Vulkanisiermittels enthält.

9. Mischung nach Anspruch 8, dadurch gekennzeichnet, daß das Vulkanisiermittel Schwefel und ein Vulkanisationsbeschleuniger ist oder ein organisches Peroxid ist.

10. Mischung nach Anspruch 8 oder Anspruch 9, dadurch gekennzeichnet, daß die Mischung vulkanisiert ist.

11. Mischung nach einem der vorhergehenden Ansprüche, dadurch gekennzeichnet, daß das ölfeste Elastomer ein Polyepichlorhydrin-Elastomer, ein Fluorelastomer, ein Vinylacetat-Elastomer, Polychloropren, chlorsulfoniertes Polyethylen, chloriertes Polyethylen, ein Polyurethan-Elastomer, ein Ethylen-Acrylsäure-Copolymer oder ein Polymer mindestens eines Alkylenoxid-Monomers ist.

## Revendications

1. Composition de mélange de polymères comprenant un mélange de (1) 5 pour cent à 95 pour cent en poids en se basant sur le mélange total d'un élastomère résistant aux huiles et (2) un terpolymère éthylène/propylène/diène non conjugué où est greffée une résine caractérisée en ce que la résine greffée est une résine de méthacrylate de méthyle en une quantité de 10 à 60 pour cent en poids en se basant sur le poids total du composant (2).

2. Composition selon la revendication 1 caractérisée en ce que le diène non conjugué du terpolymère d'éthylène propylène est de l'éthylidènenorbornène, du dichloropentadiène ou de l'hexadiène.

3. Composition selon la revendication 1 ou la revendication 2 caractérisée en ce que l'élastomère résistant aux huiles est un caoutchouc nitrile.

17

0 044 683

4. Composition selon la revendication 3 caractérisée en ce que le caoutchouc nitrile comprend environ 20 à einvron 50 pour cent en poids, en se basant sur le caoutchouc nitrile, d'acrylonitrile.

5. Composition selon la revendication 4 caractérisée en ce que le caoutchouc nitrile comprend environ 30 à environ 45 pour cent en poids d'acrylonitrile.

6. Composition selon la revendication 5 caractérisée en ce que le caoutchouc nitrile forme environ 40 à environ 90 pour cent en poids de la composition totale.

7. Composition selon la revendication 6 caractérisée en ce que le caoutchouc nitrile forme environ 50 à 80 pour cent en poids du mélange total.

8. Composition selon l'une quelconque des revendications précédentes caractérisée en ce que la composition contient également une quantité efficace d'un agent vulcanisant.

9. Composition selon la revendication 8 caractérisée en ce que l'agent vulcanisant est du soufre et un accélérateur de durcissement, ou bien est un péroxyde organique.

10. Composition selon la revendication 8 ou la revendication 9 caractérisée en ce que la composition est vulcanisée.

11. Composition selon l'une quelconque des revendications précédentes caractérisée en ce que l'élastomère résistant aux huiles est un élastomère de polyépichlorohydrine, un fluoro-élastomère, un élastomère d'acétate de vinyle, du polychloroprène, un polyéthylène chlorosulfoné, un polyéthylène chloré, un élastomère de polyuréthane, un copolymère d'éthylène-acide acrylique ou un polymère d'au moins un monomère d'oxyde d'alcoylène.

18